# EUROPÄISCHE PATENTSCHRIFT

(11) **EP 1 112 194 B1**
(45) Veröffentlichungstag und Bekanntmachung des Hinweises auf die Patenterteilung: **24.04.2002**
(21) Anmeldenummer: 99968231.3
(22) Anmeldetag: 01.09.1999
(51) Int. Cl.: B60J 7/10

(54) **LÄNGSTRÄGERKUPPLUNG FÜR PLANENVERDECKE VON FAHRZEUGAUFBAUTEN**
SIDE-RAIL COUPLING FOR TARPAULIN COVERS OF VEHICLE SUPERSTRUCTURES
COUPLAGE DE LONGERON DESTINE A DES DAIS A BACHES DE CARROSSERIES DE VEHICULES

(30) Priorität: 01.09.1998 DE 19839819
(43) Veröffentlichungstag der Anmeldung: 04.07.2001
(73) Patentinhaber: Edscha LKW-Schiebeverdecke GmbH, 42855 Remscheid (DE)
(72) Erfinder: FLIEGE, Dieter, D-42855 Remscheid (DE); REMMEL, Roger, D-42897 Remscheid (DE); DRASCH, Josef, D-94577 Winzer (DE)
(74) Vertreter: Sparing, Rolf Klaus
(86) Internationale Anmeldenummer: DE9902826
(87) Internationale Veröffentlichungsnummer: WO0012340

(56) Entgegenhaltungen:
- DE-U- 9 403 053
- US-A- 3 556 569
- US-A- 3 894 598

## Beschreibung

Die Erfindung bezieht sich auf eine Längsträgerkupplung für obere Längsträger von Verdeckgestellen für Planenverdecke von Fahrzeugaufbauten nach dem Oberbegriff des Anspruchs 1. Derartige kupplungen sind allgemein bekannt.

Bei mit einem vermittels eines Verdeckgestelles gegen die Ladefläche bzw. das Fahrzeugchassis abgestützten und vorzugsweise zusammenschiebbaren Planenverdeck ausgestatteten Fahrzeugen ergibt sich in machen Fällen die Notwendigkeit zur Erleichterung bzw. überhaupt zur Ermöglichung einer Beladung von oben oder zur Beladung mit sperrigem Ladegut einen Teil des Verdeckgestänges abbauen zu können. In der Hauptsache handelt es sich bei den zu den vorgenannten Zwecken abzubauenden Teilen eines Verdeckgestänges um Längenabschnitte dessen oberer Längsträger, welche für die reibungslose Ausführung eines Be- oder Entladevorganges über einen Teil der Länge des Verdeckgestelles hin abgenommen werden und anschließend wieder in den Verband des Verdeckgestänges eingesetzt werden müssen. Die oberen Längsträger eines Verdeckgestelles bestehen in der Regel aus einem durch wenigstens eine Hohlprofilkammer gebildeten Tragprofil und wenigstens einer an dieses angefügten Lauf- und Führungsschiene für die, vorzugsweise längsverschiebliche Abstützung von eine Verdeck- oder wenigstens Dachplane tragenden Spriegeln. In der herkömmlichen Weise werden trenn- und abnehmbare, aneinandergrenzende Längenabschnitte der oberen Längsträger von Verdeckgestellen oder auch sonstig gestalteter Fahrzeugaufbauten mittels starrer, aus Vollmaterial bestehender und in die Hohlprofilkammern zweier miteinander zu kuppelnder Längsträgerabschnitte eingreifender Profilmaterialabschnitte miteinander verbunden, wobei zur Sicherung der gegenseitigen Verbindung zweier aneinandergrenzender Längenabschnitte eines Längsträgers die unterschiedlichsten Mittel eingesetzt wurden. Unabhängig davon, wie die bekannten, zur Sicherung der Kupplung zweier miteinander zu kuppelnder Längsträgerabschnitte eingesetzten Mittel im Einzelnen auch immer beschaffen sind, haftet ihnen gemeinsam der Nachteil an, daß sie nicht selbsttätig einrückend ausgebildet sind. Im Weiteren ist die Ausbildung der bekannten Kupplungselemente als Vollmaterialabschnitte mit dem Nachteil eines erheblichen Gewichtes verbunden.

US-A-3 556 569 beschreibt eine Vorrichtung zum rechtwinkligen Verbinden zweier Hohlprofile. Dabei wird ein Verbindungselement einseitig mittels einer Schraubverbindung auf einer Seitenfläche eines ersten Hohlprofils festgelegt und anderseitig in ein zweites Hohlprofil eingeführt, wo es mittels eines blattfederbelasteten Riegelelements und einer komplementären Aussparung in einer Seite des zweiten Hohlprofils festgelegt wird.

US-A-3 894 598 beschreibt eine Teleskopstange, bestehend aus zwei gleitend angebrachten Stangenabschnitten und einer Vorrichtung zur Kontrolle der Positionen der zwei Stangenabschnitte relativ zueinander. Ein Sperrmechanismus ermöglicht ein selektives Sperren und entsperren der Stangenabschnitte. Dabei werden Riegelelemente eingesetzt, die aus einem einzelnen federbelasteten Riegel für jeden Stangenabschnitt bestehen. Die Riegelelemente sind jeweils zusammen mit einer belastenden Spiralfeder in topfförmigen Gehäusen aufgenommen, welche wiederum an der Innenwand der hohlen Stangenabschnitte festgelegt sind.

DE 94 03 053 U beschreibt ein längenverstellbares Teleskoprohr, insbsondere für ein Stützbein für LKW-Wechselaufbauten, mit mindestens einem inneren und einem äußeren Rohrabschnitt und axial beabstandeten, quer verlaufenden Durchgangsbohrungen, sowie einem zur Axialverriegelung der Rohrabschnitte in einer bestimmten, auswählbaren Auszugsposition durch diese hindurchsteckbaren Bolzen.

Es ist die Aufgabe der Erfindung, eine Längsträgerkupplung nach dem Oberbegriff des Anspruchs 1 zu schaffen, welche sich vollkommen unabhängig von der Bauart des Längsträgers als Stahl-Profilträger oder als Strangpressprofil in erster Linie durch ein selbsttätiges Einrücken der Sicherungsmittel und des weiteren durch ein geringstmögliches Gewicht sowie eine einfache Herstell- und Handhabbarkeit auszeichnet.

Diese Aufgabe wird für eine eingangs genannte Längsträgerkupplung erfindungsgemäß mit den kennzeichnenden Merkmalen des Anspruchs 1 gelöst. Die erfindungsgemäße Ausstattung der Kupplungselemente mit unter Federbelastung selbsttätig einrückenden Riegelelementen gewährleistet eine automatische Sicherung der Kupplung zwischen zwei aneinandergrenzenden Längsträgerabschnitten. Damit ist jedes aus möglichen Nachlässigkeiten des Bedienungspersonales resultierende Unfallrisiko ausgeschlossen. Im Weiteren bringt die erfindungsgemäße Ausgestaltung einer Längsträgerkupplung den zusätzlichen Vorteil einer verhältnismäßig leichten Trennbarkeit mit sich. Weiterhin wird zum einen eine erhebliche Gewichtsverringerung gegenüber Vollmaterialteilen und zum anderen eine zusätzliche Verbesserung der Sicherheit der Verriegelung der Kupplungselemente mit den miteinander zu kuppelnden Längsträgerabschnitten gewährleistet. Besonders vorteilhaft ist es dabei, daß die den Riegelelementen zugeordneten Ausnehmungen in Außenumfangswandungen des Längsträgerproflles bildenden Wandungen der Hohlprofilkammern angeordnet sind und diese durchsetzen, woraus der Vorteil resultiert, daß die Riegelelemente beim gewollten Trennen der Kupplung zweier aneinandergrenzender Längsträgerabschnitte, unabhängig von der Gestaltungsweise der Längsträgerabschnitte als Strangpressprofil oder als Stahl-Profil ohne Zuhilfenahme eines Werkzeuges und lediglich manuell ausgerückt werden können. Dies führt im Ergebnis zu einer erheblichen Verbesserung der Handhabbarkeit des Verdeckgestelles und damit letztlich zu einer beträchtlichen Erhöhung der Nutzungsqualtität des Verdeckes insgesamt.

In einer zweckmäßigen Einzelausgestaltung ist hinsichtlich des Einbaues der Riegelelemente und ihrer Belastungsfedern in das Kupplungselement vorgesehen, daß die jeweils zwei einander gegenüberliegend angeordneten Riegelelemente in einer quer zur Längsachse des Kupplungselementes ausgerichteten hülsenartigen Führung aufgenommen und durch eine gemeinsame, zwischen ihnen angeordnete und als Schraubenfeder ausgebildete Druckfeder beaufschlagt sind.

Nach einer weiteren zweckmäßigen Einzelausgestaltung kann hinsichtlich des Einbaues der Riegelelemente und ihrer Belastungsfedern in das Kupplungselement auch vorgesehen sein, daß die jeweils zwei einander gegenüberliegend angeordneten Riegelelemente durch eine gemeinsame Blattfeder in entgegengesetzten Richtungen mit-einer Federlast beaufschlagt sind, wobei die Blattfeder aus einem U-förmig gebogenen Zuschnitt eines Federblechmaterials besteht und die beiden freien Enden der Schenkel der Blattfeder gegeneinander abgestützt sind.

Unbeschadet des Umstandes, daß sich die erfindungsgemäße Längsträgerkupplung zur Verwendung in Verbindung mit jeder vorkommenden Gestaltungsform von Längsträgern von Verdeckgestellen hervorragend eignet, wird eine besonders bevorzugte Anwendung darin gesehen, daß der Längsträger aus Längenabschnitten eines Stahl-Profiles zusammengesetzt ist, wobei die das Tragprofil bildende Profilhohlkammer durch einen zu einer quadratischen Profilquerschnittsform verformten Bereich einer durch Faltung eines Blechmaterials oder durch Verformung eines dünnwandigen Hohlprofilmaterials gebildeten Einheit aus Tragprofil und angeformter Lauf- und Führungsschiene mit T-förmigen Querschnittsprofil gebildet ist.

Unabhängig von der Ausbildung desjenigen Längsträgers, dessen Längenabschnitte untereinander zu kuppeln sind, ist es schließlich noch vorteilhaft, daß die einander gegenüberliegend angeordneten Riegelelemente des Kupplungselements als einander gegenüberliegende Wandungen des Tragprofiles durchgreifende Druckknöpfe ausgebildet sind.

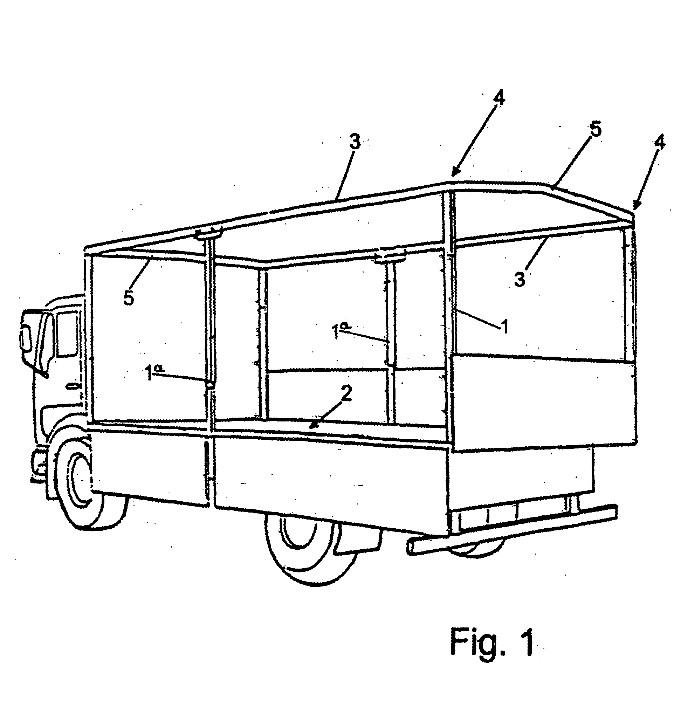

Die Erfindung ist in der nachfolgenden Beispielsbeschreibung anhand zweier in der Zeichnung dargestellter Ausführungsbeispiele im Einzelnen beschrieben
- Fig. 1: zeigt eine schematische schaubildliche Darstellung eines mit einem Verdeckgestell ausgestatteten Nutzfahrzeuges;

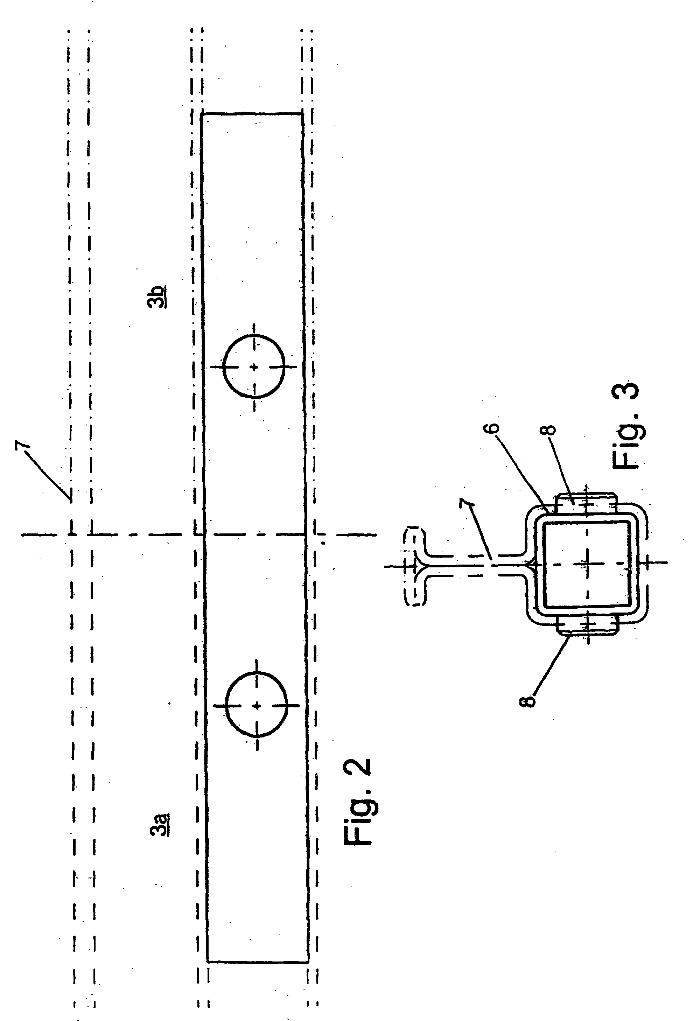

- Fig. 2: zeigt einen Teillängsschnitt durch den Bereich zweier aneinandergrenzender Längenabschnitte eines oberen Längsträgers des Verdeckgestelles gemäß Fig. 1;
- Fig. 3: zeigt einen Querschnitt durch einen Längenabsehnitt des oberen Längsträgers eines Verdeckgestelles im Bereich seiner Kupplung mit einem Nachbarabschnitt;
- Fig. 4: zeigt einen Längsschnitt durch eine erste Verwirklichungsform eines Kupplungselementes und
- Fig. 5: zeigt einen Längsschnitt durch eine zweite Verwirklichungsform eines Kupplungselementes.

Ein mit einem in der Zeichnung nicht vollständig gezeigten zusammenschiebbaren Planenverdeck ausgestatteter Fahrzeugaufbau, weist ein Verdeckgestell auf, welches in seinen beiden oberen seitlichen Bereichen jeweils einen sich über die Verdecklänge hin erstreckenden und über aufragende Stützen 1 gegen eine Ladepritsche 2 abgestützte Längsträger 3 zur Halterung und Führung verschieblicher und beidendig mit Rollenwagen 4 ausgestatteten Spriegel 5, welche ihrerseits die Verdeckplane tragen, umfaßt. Die Längsträger 3 sind über die Verdecklänge hin zudem mittels verschieblicher Rungen 1a gegen die Ladepritsche 2 bzw. deren Rahmen abgestützt. Die Längsträger 3 sind bei dem in der Zeichnung gezeigten Ausführungsbeispiel über die Fahrzeuglänge hin in eine Anzahl untereinander verbindbarer bzw. miteinander kuppelbarer Längenabschnitte 3a und 3b unterteilt. Außerdem besteht in der gezeigten Ausführungsform jeder der beiden Längsträger 3 aus Längenabschnitten 3a und 3b eines einteiligen Profilmaterials, insbesondere eines Stahl-Profiles, bei dem eine das Tragprofil bildende Profilhohlkammer 6 durch einen zu einer quadratischen Profilquerschnittsform verformten Bereich einer durch Faltung eines Blechmaterials oder durch Verformung eines dünnwandigen Hohlprofilmaterials gebildeten Einheit aus Tragprofil und angeformter Lauf- und Führungsschiene 7 mit T-förmigen Querschnittsprofil für die Rollen der Rollenwagen 4 gebildet ist.

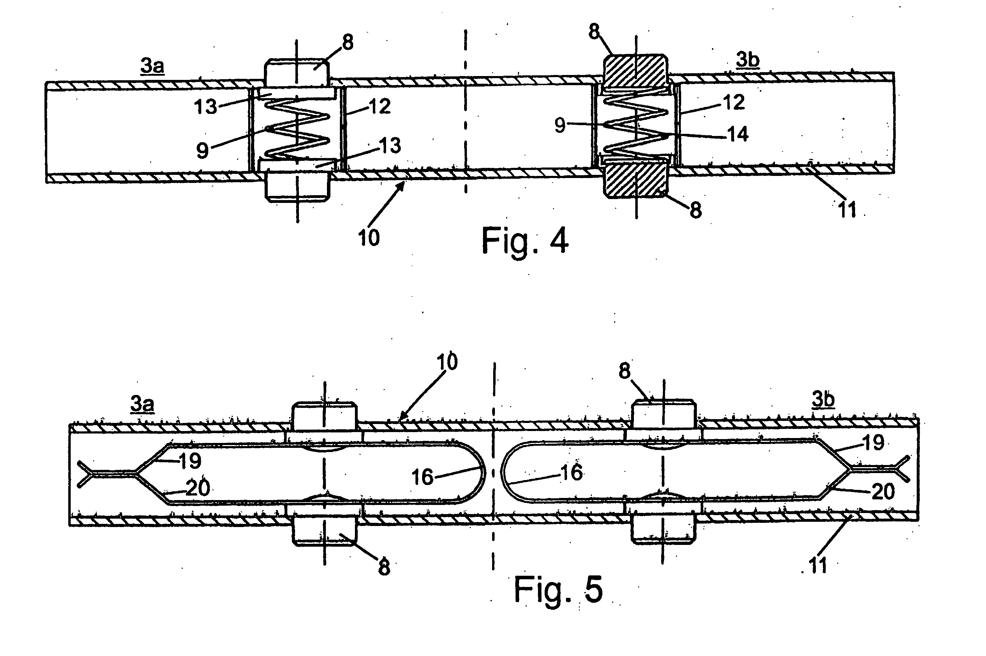

Gemäß der in der Fig. 4 dargestellten ersten Ausgestaltung des Einbaues der Riegelelemente 8 und ihrer Belastungsfedern 9 in. einen ein Kupplungselement 10 bildenden Abschnitt 11-eines Hohlprofilmaterials sind jeweils zwei einander gegenüberliegend angeordnete Riegelelemente 8 in einer quer zur Längsachse des Kupplungselementes 10 ausgerichteten hülsenartigen Führung 12 aufgenommen und durch eine gemeinsame, zwischen ihren einander zugewandten Enden 13 angeordnete und als Schraubenfeder 14 ausgebildete Belastungsfeder beaufschlagt. Die beiden Riegelelemente 8 sind dabei zudem in der hülsenartigen Führung 12 geführt.

Gemäß der in der Fig. 5 dargestellten zweiten Ausgestaltung des Einbaues der Riegelelemente 8 und ihrer Belastungsfedern in das Kupplungselement 10 sind jeweils zwei einander gegenüberliegend angeordnete Riegelelemente 8 durch eine gemeinsame Blattfeder 16 in entgegengesetzten Richtungen mit einer Federlast beaufschlagt, wobei die Blattfeder 16 aus einem U-förmig gebogenen Zuschnitt eines Federblechmaterials besteht und die beiden freien Enden der jeweils einem Riegelelement 8 zugeordneten Schenkel 19 und 20 der Blattfeder 16 gegeneinander abgestützt sind.

## Patentansprüche

1. Längsträgerkupplung für obere Längsträger (3) von Verdeckgestellen für Planenverdecke von Fahrzeugaufbauten, wobei die Längsträger (3) zusammensetzbare und trennbare Längenabschnitte (3a, 3b) von Lauf- und Führungsschienen (7) für ein zusammenschiebbares Planenverdeck aufweisen, die Längsträger (3) wenigstens eine Hohlprofilkammer (6) aufweisen und die Lauf- und Führungsschienen (7) an diese Hohlprofilkammer (6) angeschlossenen sind und der Abstützung und Führung von Rollen oder Rollenwagen (4) dienen, die Dachplane tragende Spriegel (5) verschieblich gegen das Verdeckgestell abstützen, und wobei aneinandergrenzende Längenabschnitte (3a, 3b) der Längsträger (3) mittels formschlüssig in ihre Hohlprofilkammer (6) eingreifender Kupplungselemente (10) lösbar miteinander verbindbar sind,
**dadurch gekennzeichnet,**
**daß** die Kupplungselemente (10) durch eine zum lichten Profilquerschnitt der Hohlprofilkammer (6) wenigstens im wesentlichen deckungsgleiche Profilquerschnittsform aufweisende Hohlprofilmaterialabschnitte (11) gebildet und bezüglich jedes der beiden miteinander zu kuppelnden Längenabschnitte (3a, 3b) der Längsträger (3) mit jeweils zwei gegenüberliegenden, gegen eine Federlast senkrecht zu ihrer Längsachse stellbaren, mit einer komplementären, in den Wandungen der Hohlprofilkammem (6) der miteinander zu koppelnden Längenabschnitte (3a, 3b) der Längsträger (3) angeordneten Ausnehmungen zusammenwirkenden Riegelelemente (8) ausgestattet sind, wobei die Federlast der jeweils zwei gegenüberliegenden Riegelelemente (8) aus einer für die jeweils zwei gegenüberliegenden Riegelelemente (8) gemeinsam wirkenden Belastungsfeder (9, 14; 16) stammt.

2. Längsträgerkupplung nach Anspruch 1, daduch gekennzeichnet, daß die Riegelelemente (8) die zugeordneten Ausnehmungen in Außenumfangswandungen der Hohlprofilkammern (6) durchsetzen.

3. Längsträgerkupplung nach Anspruche 1 oder 2, **dadurch gekennzeichnet, daß** die jeweils zwei einander gegenüberliegend angeordneten Riegelelemente (8) in einer quer zur Längsachse des Kupplungselementes (10) ausgerichteten hülsenartigen Führung (12) aufgenommen und durch eine gemeinsame, zwischen ihnen angeordnete und als Schraubenfeder (14) ausgebildete Druckfeder beaufschlagt sind.

4. Längsträgerkupplung nach Anspruche 1 oder 2, dadurch zeichnet, daß jeweils die zwei einander gegenüberliegend angeordneten Riegelelemente (8) durch eine gemeinsame Blattfeder (16) in entgegengesetzten Richtungen mit einer Federlast beaufschlagt sind, wobei die Blattfeder (16) aus einem U-förmig gebogenen Zuschnitt eines Federblechmaterials besteht und die beiden freien Enden der Schenkel (19,20) der Blattfeder (16) gegeneinander abgestützt sind.

5. Längsträgerkupplung nach einem der Ansprüche 1 bis 4, **dadurch gekennzeichnet, daß** der Längsträger (3) aus Längenabschnitten (3a, 3b) eines Stahl-Profiles zusammengesetzt ist, wobei die das Tragprofil bildende Hohlprofilkammer (6) durch einen zu einer quadratischen Profilquerschnittsform verformten Bereich einer durch Faltung eines Blechmaterials oder durch Verformung eines dünnwandigen Hohlprofilmaterials gebildeten Einheit aus Tragprofil und angeformter Lauf- und Führungsschiene (7) mit T-förmigem Querschnittsprofil gebildet ist.

6. Längsträger nach Anspruch 5, **dadurch gekennzeichnet, daß** die einander gegenüberliegend angeordneten Riegelelemente des Kupplungselements (10) als einander gegenüberliegende Wandungen des Tragprofiles durchgreifende Druckknöpfe (8) ausgebildet sind.

## Claims

1. A side-rail coupling for upper side rails (3) of canopy frames for tarpaulin canopies of vehicle superstructures, which side rails (3) having length sections of running and guide rails for a tarpaulin canopy which can be pushed together, said length sections being able to be put together and to be separated, the side rails (3) having at least one hollow profile chamber (6) and, connected to said hollow profile chamber (6), the running and guide rails (7) serving for the supporting and guiding of rollers or roller carriages (4), said rollers or roller carriages (4) supporting bows (5) carrying the roof tarpaulin against the canopy frame in a displaceable manner, and adjacent length sections (3a, 3b) of said side rails (3) being connectable releasably to each other by means of coupling elements (10) engaging in a form-locking manner in the hollow profile chamber (6) of said side rails (3),
**characterized in that**
the coupling elements (10) are formed by hollow profile material sections (11) having a profile cross-sectional shape which is at least substantially congruent to the clear profile cross section of the hollow profile chamber (6), and for each of the two length sections (3a, 3b) to be coupled together of the side rails (3) the coupling elements are fitted with respective two opposite bolt elements (8) which can each be adjusted perpendicular to their longitudinal axis counter to a spring load and interact with complementary recesses arranged in the walls of the hollow profile chambers (6) of the length sections (3a, 3b) to be coupled together of the side rails (3), the spring load of the respective two opposite bolt elements (8) being provided by a load spring (9, 14; 16) which is commonly acting at least for the respective two opposite bolt elements (8).

2. The side-rail coupling as claimed in claim 1, **characterized in that** the bolt elements (8) pass through the assigned recesses in outer circumferential walls of the hollow profile chambers (6).

3. The side-rail coupling as claimed in claim 1 or 2, **characterized in that** the two respective bolt elements (8) which are arranged opposite each other are held in a sleeve-like guide (12) aligned transversely to the longitudinal axis of the coupling element (10) and are acted upon by a common compression spring which is arranged between them and is designed as a helical spring (14).

4. The side-rail coupling as claimed in claim 1 or 2, **characterized in that** the two respective bolt elements (8) which are arranged opposite each other are acted upon with a spring load in opposite directions by means of a common leaf spring (16), the leaf spring (16) consisting of a section bent in the shape of a U of spring steel sheet material and the two free ends of the legs (19, 20) of the leaf spring (16) being supported against each other.

5. The side-rail coupling as claimed in one of claims 1 to 4, **characterized in that** the side rail (3) is composed of length sections (3a, 3b) of a steel profile, the hollow profile chamber (6) which forms the supporting profile being formed by a region, deformed to form a square profile cross-sectional shape, of a unit comprising the supporting profile and integrally formed running and guide rail (7) having a T-shaped cross-sectional profile, which unit is formed by folding a sheet-metal material or by deformation of a thin-walled hollow profile material.

6. The side-rail coupling as claimed in claim 5, **characterized in that** the bolt elements (8) which are arranged opposite each other of the coupling element (10) are formed as push buttons (8) which reach through mutually opposite walls of the supporting profile.

## Revendications

1. Dispositif de couplage de longerons pour des longerons supérieurs (3) de bâtis de bâches pour des dais à bâches de carrosseries de véhicules, les longerons (3) présentant des tronçons de longueur (3a, 3b) pouvant être assemblés et séparés, appartenant à des rails de défilement et de guidage (7) pour un dais de bâches repliable, les longerons (3) présentant au moins une chambre de profilé creux (6) et les rails de défilement et de guidage (7) sont raccordés à cette chambre de profilé creux (6) et servent à l'appui et au guidage de galets ou de chariots à galets (4), soutenant de façon mobile les arceaux (5) portant la bâche, contre le bâti de bâches, et où des tronçons de longueur (3a, 3b), limitrophes, des longerons (3) sont susceptibles d'être reliés ensemble de façon désolidarisable à l'aide d'éléments de couplage (10) s'engageant, par une liaison à ajustement de forme, dans leur chambre de profilé creux (6),
**caractérisé en ce que**
les éléments de couplage (10) sont formés par des tronçons de matériau profilé creux (11) présentant une forme de section transversale de profil au moins pratiquement en coïncidence avec la section transversale de profil libre de la chambre de profilé creux (6), et par rapport à chacun des deux tronçons de longueur (3a, 3b), à accoupler ensemble, des longerons (3) sont munis chacun de deux éléments de verrouillage (8) opposés, pouvant être positionnés à l'encontre d'une force élastique agissant perpendiculairement à leur axe longitudinal, éléments de verrouillage coopérant avec des évidements complémentaires, ménagés dans les parois des chambres de profilé creux (6) des tronçons de longueur (3a, 3b), à accoupler ensemble, des longerons (3), la charge élastique chaque fois de deux éléments de verrouillage (8) opposés provenant d'un ressort de chargement (9, 14; 16) agissant conjointement pour les deux éléments de verrouillage (8) opposés respectifs.

2. Dispositif de couplage de longerons selon la revendication 1, **caractérisé en ce que** les éléments de verrouillage (8) traversent les évidements associés ménagés dans les parois périphériques extérieures des chambres de profilé creux (6).

3. Dispositif de couplage de longerons selon la revendication 1 ou 2, **caractérisé en ce que** les éléments de verrouillage (8) disposés chaque fois à l'opposé l'un de l'autre sont logés dans un guidage (12) du genre d'une douille, orienté transversalement par rapport à l'axe longitudinal de l'élément de couplage (10), et sont sollicités par un ressort de compression commun, disposé entre eux et réalisé sous forme de ressort hélicoïdal (14).

4. Dispositif de couplage de longerons selon la revendication 1 ou 2, **caractérisé en ce que** les deux éléments de verrouillage (8) disposés l'un à l'opposé de l'autre sont chacun sollicités par une charge élastique agissant dans des directions opposées, exercée par un ressort à lame (16) commun, le ressort à lame (16) étant constitué d'une découpe, cintrée en U, d'un matériau en tôle à ressort et les deux extrémités libres des branches (19, 20) du ressort à lame (16) étant soutenues l'une contre l'autre.

5. Dispositif de couplage de longerons selon l'une des revendications 1 à 4, **caractérisé en ce que** le longeron (3) est obtenu par assemblage de tronçons de longueur (3a, 3b) d'un profilé en acier, la chambre de profilé creux (6) formant le profilé support étant formée par une zone, déformée pour obtenir une forme de section transversale de profil carré, d'une unité, formée par pliage d'un matériau en tôle ou par déformation d'un matériau profilé creux à paroi mince, unité constituée d'un profilé support et de rails de défilement et de guidage (7), formés sur lui d'un seul tenant, ayant une section transversale de profilé en forme de T.

6. Dispositif de couplage de longerons selon la revendication 5, **caractérisé en ce que** les éléments de verrouillage, disposés à l'opposé l'un de l'autre de l'élément de couplage (10), sont réalisés sous la forme de bouton-pression (8) traversant des parois mutuellement opposées du profilé support.
